(19) **Europäisches Patentamt / European Patent Office / Office européen des brevets**

(11) **EP 1 460 353 B1**

(12) **EUROPEAN PATENT SPECIFICATION**

(45) Date of publication and mention
of the grant of the patent:
**07.05.2008 Bulletin 2008/19**

(51) Int Cl.:
*F24H 1/20* (2006.01)     *A47J 31/54* (2006.01)

(21) Application number: **04005358.9**

(22) Date of filing: **05.03.2004**

(54) **An electric coffee maker**

Elektrische Kaffeemaschine

Machine à café électrique

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **18.03.2003 IT mi20030517**

(43) Date of publication of application:
**22.09.2004 Bulletin 2004/39**

(73) Proprietor: **ILLYCAFFE S.p.A.**
**I-34147 Trieste (IT)**

(72) Inventors:
• **Della Pietra, Bruno**
**34147 Trieste (IT)**
• **Mastropasqua, Luca**
**34147 Trieste (IT)**
• **Suggi Liverani, Furio**
**34147 Trieste (IT)**

(74) Representative: **Ferraiolo, Ruggero et al**
**FERRAIOLO S.r.l.,**
**Via Napo Torriani, 10**
**20124 Milano (IT)**

(56) References cited:
**DE-A1- 2 907 495         ES-A1- 2 120 323**
**GB-A- 1 373 990          LU-A1- 40 639**
**US-A- 4 692 592**

**Description**

The present invention concerns an electric coffee maker and, more particularly, an espresso coffee maker operable in a vehicle with a low-power electricity supply.

Espresso coffee makers always include a heating system that has the function of raising the temperature of the water from its initial value, generally comprised between 10°C and 30°C, to the final value needed for correct preparation of the coffee, a value that is conventionally referred to as the percolation temperature and is generally comprised between 90°C and 100°C. The water heating systems most widely employed in the espresso coffee preparation field can be classified into two typologies: boilers and instantaneous heaters, the latter being also known as thermoblocks. Boilers assume the form of a closed and watertight receptacle equipped with heating means, temperature control means, safety means to avoid excessive pressures and means that will permit the cold water to enter the boiler and the hot water to issue therefrom. In a first phase the function of the boiler consists of heating the water contained in it to the desired temperature by means of an electric resistance and then, in a second phase, maintaining this temperature and thus making it possible for the coffee maker to be used. When the hot water is requested, a pump is activated and, sending cold water into the boiler, causes the expulsion of hot water, which is then used to prepare the beverage. The instantaneous heater, on the other hand, is a coil arranged in a block of metallic material maintained at a desired temperature by appropriate heating and control means. During the waiting phase this device is generally empty, but then, at the moment of demand, water is passed through it and, coming into contact with the previously heated internal walls of the serpentine, is brought to the desired temperature.

At the moment when the coffee is supplied, both these heating systems suffer a significant lowering of the temperature due to the entry of cold water into the system. The need for supplying coffee at any time the users may require leads to the heating means being designed with a thermal power such as to maintain the device always ready for furnishing coffee; in coffee makers intended for domestic use this power is generally comprised between 800 and 1200 Watt. This power, in fact, will make it possible to re-establish the operating temperature of the boiler or the thermoblock within a reasonable period of time after a cup of coffee has been made.

Boilers as described above are known from GB 1 373 990 A and ES 2 120 323 A.

The principal drawback is that it is not possible to supply a certain number of cups of coffee in rapid sequence unless the available source of electric power amounts to more than 500 Watt. The cooling of the boiler or the thermoblock due to the entry of cold water at the moment the coffee is made imposes a subsequent heating that will bring the boiler or the thermoblock back to the operating temperature, but in the case of powers of less than 500 Watt this heating needs a time that the user will find unacceptably long. In automobiles, for example, the maximum electric power available at the current socket normally used to supply cigarette lighters or other electrical accessories amounts to no more than 120 Watt (10 Ampere, 12 Volt).

The matter may be analized as a problem of energy balance; in other words, one may calculate the energy and time as requested for resetting the system at the thermic condition existing before the introduction of cold water; in the following calculation, in order to simplify it, the loss of heat from the heating system towards the surrounding environment during heating is not considered. In correspondence to each delivery of 30 ml of coffee beverage into a coffee cup, there is a delivery of about 50 ml of hot water from the boiler and the corresponding inlet of same amount of cold water into the boiler; actually, a part of the water supplied from the boiler goes to wet the bed of coffee powder and fill the extraction chamber so that such water is not poured into the cup as part of the coffee beverage. Therefore, on each delivery of 30 ml of coffee beverage, 50 ml of cold water at about 20°C enter the boiler and 50 ml of water at about 100°C leave the boiler. Maintaining the thermic condition of the boiler means lifting the temperature of the inlet water (50 ml) to its final value (about 100°C); to cause said 50 ml of water growing from the initial temperature of 20°C to the final of 100°C the amount of required energy is given by the formula :

$$Q = m \times C \times (t_2 - t_1),$$

in small calory,
where:

m :  water mass in grams, g
C :  water specific heat = 1 calory/°C x g
$t_2$-$t_1$  termic difference in °C.

The values specified above are introduced in the formula and

$$Q = 50 \times 1 \ (100 - 20) = 50 \times 80 = 4,000 \ \text{calory}$$

which correspond to

$$4,000 \times 4.186 = 16,744 \ \text{joule (watt x second)}$$

where 4.186 is the conversion factor calory> watt x second.

Provided energy of 120 watt is available, the theoretical time necessary for lifting the water in the boiler to the working temperature, so making nul the effect of the temperature fall due to the inlet of 50 ml of cold water, it results : 16,744 / 120 = 140 second.

In other words, it is necessary to wait for 2 minutes and 20 seconds between the end of preparation of one coffee cup and the starting of the subsequent preparation; if one considers that the preparation of one coffee cup takes about 30 seconds (delivering the beverage), for supplying four coffee cups, at least

$$30 \quad \times 4 + 140 \times 3 = 540 \ \text{seconds}$$ are necessary and this is equivalent to 9 minutes, against 3 minutes necessary with a standard coffee machine.

It is pointed out that the above calculation is optimistic since it does not take into account the amount of energy lost in the environment, which energy is a non negligeable rate of the global energetic balance.

As it is evident, such a slow operating in the prior art machines is not acceptable from a consumer.

A second disadvantage is the oscillation of the temperature of the water leaving the heater, which depends on the flow/quantity regime with which coffee is supplied and tends to oscillate with a thermal excursion that can reach as much as 20°C. This excursion is the consequence of the technical simplicity of the employed control means, normally bimetal thermostats, that - though very cheap to produce - are associated with tolerances, hysteresis loops and operating delays that have negative effects on thermal stability.

A third disadvantage is that if the boiler is to function, it will normally absorb an electric current equivalent to 1 kW.

In a domestic environment this absorption can create electrical compatibility problems when several electric household appliances are in use at the same time. In fact, all homes are controlled by a general switch that will trip and cut off the electricity supply when the total power exceeds the safety threshold of the domestic supply system, which in most cases amounts to 3 kW.

The present invention sets out to provide a coffee maker that will make it possible to prepare a sequence of espresso coffee beverages in operating times identical to those of a conventional domestic maker even when only a low-power electricity source is available. In particular, the coffee maker is equipped with a boiler that will make it possible to furnish in succession and without undesirable interruptions the quantities of water needed for the preparation of a predetermined number of espresso coffee beverages even when only a low-power electricity source is available.

The invented electric coffee maker is defined in claim 1 and comprises

i) a boiler which may contain a water volume equivalent to at least two cups of espresso coffee provided with at least one first electric resistance whose power is selected between 100 upto 400 Watt that preheats said water volume to the desired percolation temperature and at least one second electrical resistance of a power not exceeding 360 Watt located in the boiler top;

ii) separator baffles within the boiler to define at least two compartments superposed on each other that communicate with each other, the lowermost compartment being in communication with the cold water entry and the uppermost compartment being in communication with the hot water outlet and all the compartments being crossed by said first electrical resistance, separator baffles being known from document LU 40639 disclosing a water heater provided with a plurality of compartments just defined by horizontal baffles or diaphragms.

iii) a control system that manages and distributes the power of the electrical resistances according to the thermal state of the boiler.

It is well known that the electrical resistances substantially convert the power of the available electric supply source into thermal power that, in its turn, is transmitted to the volume of water in the boiler associated with the coffee maker, i.e. the overall volume of water to be processed, even though it is subdivided into the volumes of water in each of the compartments; this power will determine the time the user has to wait for having, in general, water at the percolation temperature in the upper compartment or, in case of a first operating cycle of the maker, before the water attains the percolation temperature to make a first cup of coffee.

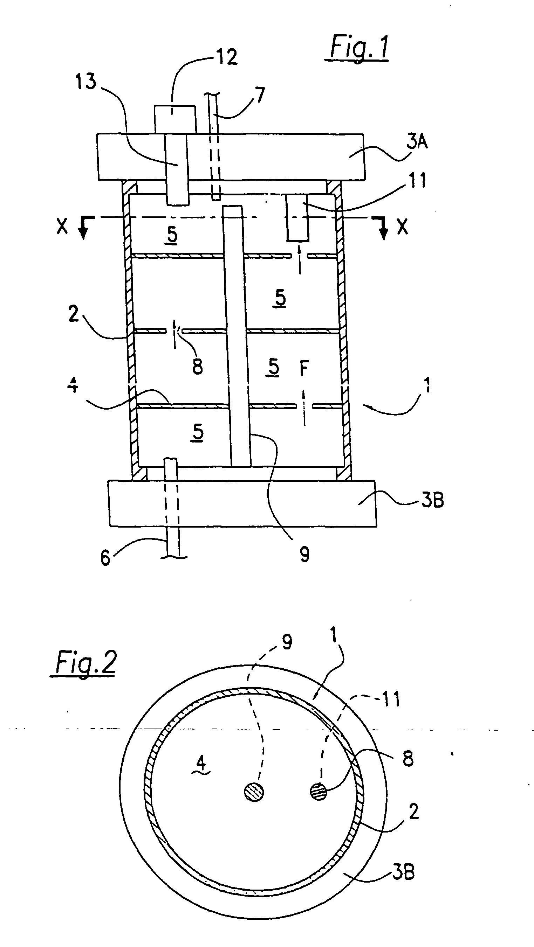

As can be seen, for example, from Figure 1, the boiler may comprise the cylindrical body and the separator baffles made of stainless steel and two end heads made of plastic material to minimize absorption and dispersion of heat. An alternative to solutions like the one that has just been indicated is that of producing the boiler with materials and thicknesses such as to increase the accumulation of energy and, consequently, the performance of the boiler as far as stabilization of the output temperature is concerned.

As known, the separator baffles serve to limit mixing and heat exchange between the hot water in the boiler and the cold water that enters the boiler, reducing the thermal effects due to the entry of cold water into the system.

The second electrical resistance heats only the water present in the upper compartment, thus making it possible to effect a limited temperature correction intervention solely on the water that leaves the boiler.

These characteristics make it possible to serve at least two cups of coffee at the desired temperature, compatibly with the natural times of using these makers and without the additional dead times that would otherwise be necessary in order to bring the temperature of the system to it normal operating value.

The functioning of the coffee maker is based on three fundamental principles:

d) use of the first electrical resistance to heat the entire volume of water in the boiler to the percolation temperature;

e) minimization of the convective heat exchange between the cold water that enters to replace the hot water used to make the coffee and the remaining hot water in the boiler by means of:

- a plurality of internal separator baffles that partialize the boiler volume into compartments are substantially superposed on each other and horizontal, connected by means communication openings that enable the water to rise from one compartment to the one immediately above it, thus following an obligatory route, or, alternatively,

- a helicoidal element defined between the perimeter wall of the boiler and the casing containing the first electrical resistance, the casing being preferably arranged along the vertical axis of the boiler; the lower end of the helicoidal element is adjacent to the lower end (head) of the boiler, where there is defined the lowermost compartment with the cold water inlet, while the upper end is adjacent to the upper end (head) of the boiler, where there is defined the uppermost compartment with the hot water outlet, so that the water is obliged pass through the boiler following an obligatory route between the two walls of the spiral,

f) bringing the water in the uppermost compartment up to the percolation temperature; this is obtained by means of the second electrical resistance of low power situated in said compartment and capable of raising a limited volume of already hot water to the percolation temperature.

In other words, what is thus made possible is the adoption of a technique of accumulating hot water in an initial phase and then expelling it without suffering excessively from the cooling effect produced by the incoming hot water. The need for the second electrical resistance is due to the fact that the thermal separation between the cold water and the hot water cannot be implemented in an absolute sense and, as the maker continues to produce coffee, removing part of the accumulated hot water from the boiler, there thus occurs a gradual lowering of the water temperature in the uppermost compartment. The second electrical resistance makes it possible to concentrate the limited available power in the most significant zone of the boiler and thus to obtain an output temperature adequate for the preparation of the coffee with only a slight energy correction.

The process comes to an end with the complete removal of the accumulated hot water from the boiler; at this point it becomes necessary to carry out a new heating cycle with the electrical resistance in order to be able to produce a new succession of cups of coffee.

The invention thus makes it possible to overcome the drawbacks of the conventional heating systems (boilers and thermoblocks) and to prepare a finite series of espresso coffes without particular interruptions in the preparation phase even when only a low-power energy source is available. This situation will generally occur when people are travelling in a transport vehicle or, more generally, when the energy source consists of a 12 or 24V accumulator supplying current of the order of 10 or 15 Ampère.

The present invention therefore removes the principal technical obstacle standing in the way of the construction of pump-type espresso coffee makers capable of being used in such leisure time transport vehicles as campers, buses, automobiles and motor boats and in commercial vehicles like trucks.

Since the proposed solution does not call for any modification of the electrical system of the means of transport, since it is possible to use the standard current socket provided in all the means of transport and normally and normally used in motor vehicles to supply cigarette lighters and other electrical accessories, one may foresee its advantageous use in the market of products for leisure-time pursuits or work that involves travelling.

A further advantage is constituted by the fact that a particularly versatile embodiment of the invention is compatible both with a low-voltage supply source (12/24 V d.c.) and a high-voltage supply source (110/230 V a.c.); use of the maker is therefore not limited to mere transport vehicles, but can also be extended to home environments.

Again a further advantage is that the coffee maker is usable in a tourist camping, camper or caravan which have available voltage supply sources almost exclusively of 230 V a.c. and low power, as 500-600 W.

In the latter case the advantage is constituted by the low power absorption, which renders the coffee maker compatible with the simultaneous operation of such other high-absorption household appliances as washing makers, electric ovens, etc.

The constancy of the temperature supplied by the system constitutes yet another advantage in the case of espresso coffee preparation, which by its very nature is particularly sensitive to the temperature of the water that strikes the coffee pod.

The invention will now be explained in detail with embodiment examples and reference to the attached drawings, of which

Figure 1 shows a first elevation and part section [of a boiler],
Figure 2 shows a section along the arrows X-X of Figure 1,
Figure 3 shows a second elevation and par section [of a boiler],
Figure 4 shows a section along the arrows X-X of Figure 1,
Figure 5 shows a third elevation and par section [of a boiler],
Figure 6 shows a first functional scheme, and
Figures 7 shows a second functional scheme.

Figures 1 and 2 show a boiler 1 consisting of a cylindrical metal body 2 made of stainless steel closed at the top and bottom end by two closure heads, respectively 3A and 3b, made of plastic material in order to minimize heat absorption and dispersion. The cylindrical body 2 can also be made of other metallic alloys or suitable plastic materials. Inside the boiler there are three separator baffles 4 made of stainless steel, which are circular in shape and have a thickness comprised between 0.5 and 1.0 mm and kept apart by means of supporting stays (not shown in the figure) in such a way as to constitute four separate compartments 5 within the boiler. The water inlet pipe 6 passes through a hole provided in the lower closure head 3B, while the hot water outlet pipe passes through a hole provided in the upper closure head 3A.

In order to permit the water to pass from one compartment of the boiler to the one above, as indicated by the arrows F, an opening is provided in each baffle in the form of a hole 8 having a diameter of a few millimeters. In a preferred embodiment shown in Figures 1 and 2 the opening in the uppermost separator baffle is provided in correspondence with the second electric resistance 11 in order for the entering water to obtain the best heating effect.

At the centre of the boiler, in axial position, the is situated the first electrical resistance 9, which is of cylindrical form, has a power of 120 W and extends from the uppermost compartment to the lowermost compartment, while the second electrical resistance 11, which is likewise of cylindrical form and has a power of 75 W, is situated in the uppermost compartment and has a length slightly smaller than the height of that compartment.

The cylinder head 3A also bears an electronic temperature transducer 12 that is connected to the interior of the uppermost compartment by means of a thermal bridge made of copper, so that it can measure the temperature of the water in this compartment.

The overall capacity of the boiler is of the order of 200 cm3; this size makes it possible to prepare a succession of up to six cups of espresso coffee - each cup about 30 cm3 - without interruption, after having waited for about 15 minutes before being able to make the first cup of the cycle; obviously, the maximum number of cups that can be prepared in succession depends on the capacity and the overall size of the boiler. Consequently, the final dimensions of the boiler depend on the way the coffee maker is to be used and the maximum number of cups the user wishes to obtain in succession, and these have to be defined in the initial phase of the design.

As already mentioned, the use of a boiler having a mass expressly increased as compared with a conventional solution, like the one illustrated above, improves the thermal performance of the boiler. For example, if the mass of 1 kg of the cylindrical body and the heads of the boiler made of aluminium were to be brought up to the temperature of the water in the first heating phase, 100°C, it would acquire a quantity of heat at least equal to that of the water, so that the total heat available at the end of the first phase would be at least double that provided by the water only, as is briefly illustrated below, where the heat absorbed by a boiler of conventional structure - for example: a thin stainless steel cylinder and head made of plastic material - is neglected.

$$Q_{water} = 200 \text{ g} \times 1 \times (100 - 20) = 16{,}000 \text{ calories}$$

$$Q_{aluminium} = 1000 \text{ g} \times 0.214 \times (100 - 20) = 17{,}120 \text{ calories.}$$

The described examples envisage the use of the boiler in an espresso coffee maker that works with prepacked single doses (pods) of coffee; this choice derives from the need that a coffee maker that is to be used for the most part outside the home environment should be practical and easy to use, even though this element does not constitute a limitation of the present invention.

In some embodiments the first resistance 9 may be realized with two different and distinct resistive elements, both extending for the entire height of the boiler, for example, one resistance of 120 W and the other 300 W, so that the first can be used when a low-power energy source is available (in transport vehicles) and the other when a source of greater power is available (at home); in this way the duration of Phase 1 can be significantly reduced whenever the energy source makes this possible.

Obviously, the system is provided with means to assure watertightness and water supply means that are not described in the present document.

Both the baffles and their supports can be made either of metallic alloys or suitable plastic materials and their number may vary according to the dimensions of the boiler and the use modalities underlying its design, i.e. from a minimum of two to, generally, a maximum of ten.

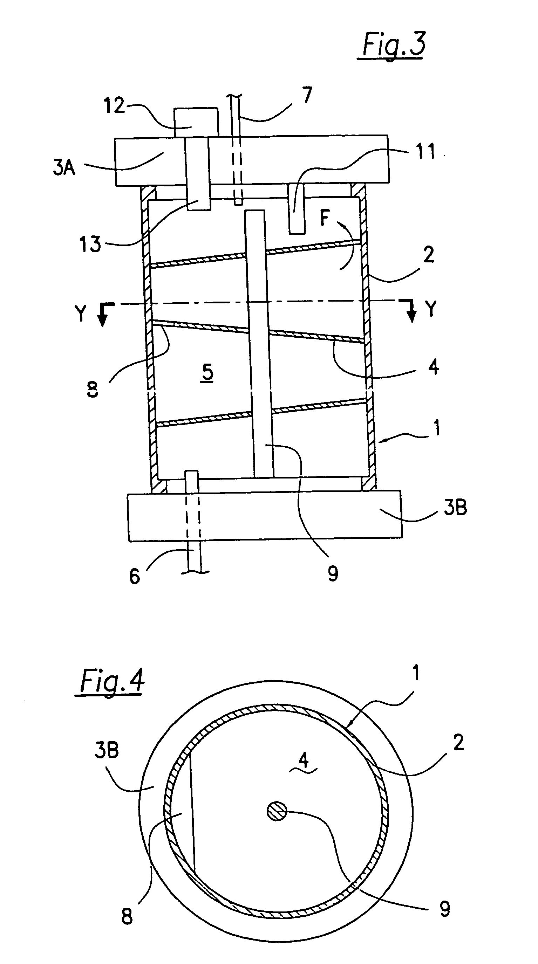

Figures 3 and 4 show a solution that differs from the one illustrated by the previous figures, because the three baffles 4 are of an oval shape and arranged at an inclination within the cylindrical body and the opening that enables the water to pass from one region to the one above it is an aperture 8 defined by the removal of the upper terminal part of the baffle. Each baffle is inclined in the direction opposite to the inclination of the adjacent baffles.

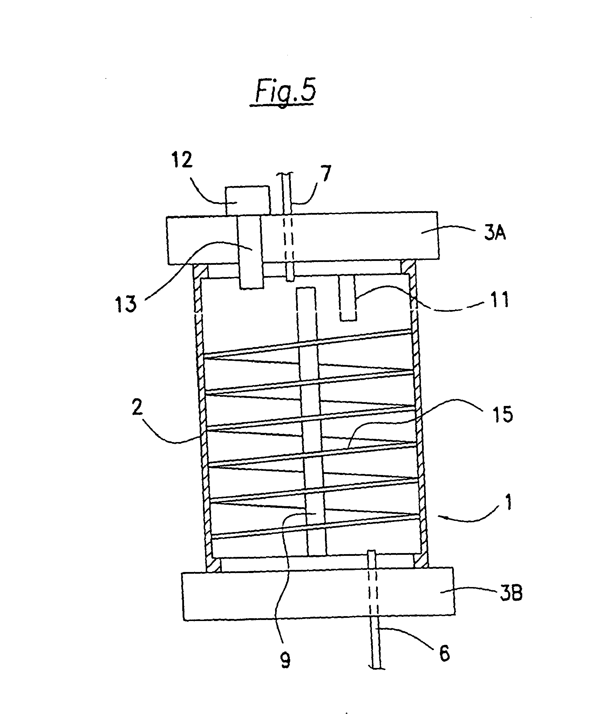

Figure 5 shows boiler structure equal to the ones illustrated by the previous figures - so that the reference numbers uses are the same as before - but in which the means capable of partializing the water volume are constituted by a continuous helicoidal strip 15 made of stainless steel and defined between the internal cylindrical wall of the boiler and the casing containing the first electrical resistance 9, which coincides with the vertical axis of the boiler, the lower end of the helicoidal strip is fixed close to the lower head of the boiler, where there is defined the lower region in which the water enters, and the upper end of the helicoidal strip is fixed close to the upper head of the boiler, where the is defined the region from which the water leaves the boiler, so that that, substantially, the water moves forward along its helicoidal course every time the maker produces a cup of coffee.

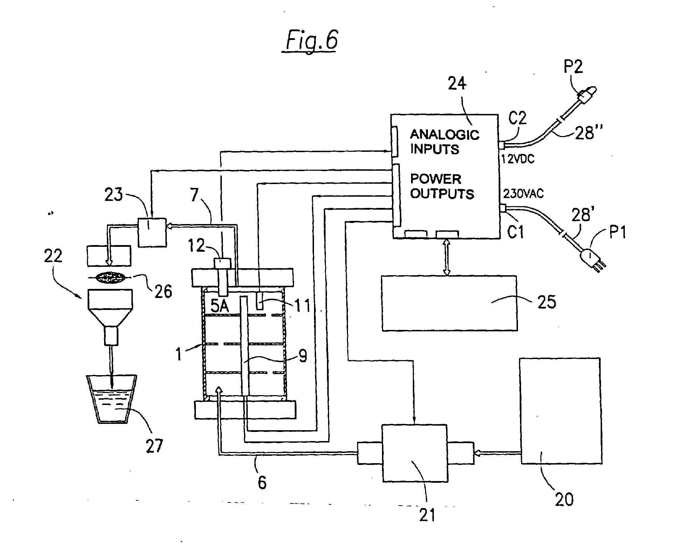

Figure 6 shows the following principal parts of an espresso coffee maker:

-   the boiler 1 as previously described,
-   a water tank 20,
-   a single dose 20 of coffee contained between two layers of paper through which the water cane permeate,
-   a cord 28' that provides an electrical connection between the maker and an electricity supply source in the form of a commercial network at a 230 V a.c., where the cord can be connected to the maker by means of the connector C1 and connected to the socket of the electricity supply source by means of a conventional plug P1,
-   a cord 28" that provides an electrical connection between the maker and an electricity supply source in the form of the cigarette lighter of a motor vehicle, where the cord can be connected to the maker by means of the connector P2 and connected to the socket of the electricity supply source by means of a suitable plug P2,

and the following operational means:

-   a water pump 21,
-   a coffee extraction chamber 22,
-   an electromagnetic supply valve 23
-   a digital electronic system 24 as a programmable control, for example, a microprocessor in which there is installed the software needed for managing the functions to be described hereinbelow, as also the functions that are conventionally present in a coffee maker,
-   a control panel 25 for the user.

It will readily be understood that, in a limited realization, this maker can be fed only from a low-voltage energy source, for example, a cigarette lighter in a motor vehicle. In that case the electric control meanss will be conventionally reduced and the electrical circuit will therefore be simplified.

In a complete realization, on the other hand, an example of the way the maker functions would be as follows:

Phase 1, activation of the maker and initial heating: in this first phase the control system 24 activates the first electrical resistance 9 and keeps it live until the temperature signal provided by the sensor 12 indicates that the water temperature has attained its operating value (98°C); given the limited power available, this phase may last up to 15 minutes, at the end of which the maker is ready to commence the phase of supplying six consecutive espresso coffees. The first electrical resistance 9 comprises a supplementary resistance, as may be deduced from the fact that the resistance 9 is connected to the control system 24 by means of two wires.

Phase 2, preparation of the drink: after having placed a coffee pod 26 in the filter of the extraction chamber 22 and having closed the chamber, the user prepares the coffee by operating the appropriate control of the panel 25 that sets the pump 21 in motion and opens the electromagnetic valve 23. The cold water taken from the tank 20 is pushed by the pump into the interior of the boiler 1 and, at one and the same time, an equivalent quantity of hot water issues from the outlet pipe 7 of the boiler, passes through the electromagnetic valve 23 and reaches the extraction chamber 22, where the actual extraction of the coffee takes place. A part of the water generated by the boiler contributes to saturating the coffee extraction zone and impregnating the coffee powder of the pod 26, while the principal quantity reaches the cup 27 in the form of the drink, In this phase the control 24 switches off the first electrical resistance 9 and regulates the water temperature in the uppermost region 5A by means of the temperature signal provided by the sensor 12 and the second electrical resistance 11, which acts exclusively on the water contained in the uppermost compartment. The power emitted by the second electrical resistance 11 is appropriately modulated by the control system 24 in such a way as to maintain the temperature of the water leaving the boiler within the range useful for preparing a good espresso coffee.

With a view to obtaining this result, the control system may operate in the following manner: when supply of the coffee is commenced, the first resistance 9 is shut down and the control passes to the second resistance 11, which in a particular embodiment of the control system operates with a threshold ON-OFF logic (about 98°C); the resistance becomes live whenever the temperature drops below the threshold and is shut when the temperature is above the threshold.

In this way the temperature of the uppermost region of the boiler can be maintained at a value suitable for the preparation of the drink for the time needed to make a certain number of coffees.

When the time elapsed since the supply of the last coffee exceeds the limit of about one minute, it is deemed that the user has interrupted or concluded the preparation of the cups of coffee he wished to obtain; the control therefore returns to the first resistance 9, which then absolves the task of bringing the entire water content of the boiler to the optimal temperature.

Phase 3, temperature re-establishment: at the moment in which the temperature in the uppermost compartment 5A drops below the minimum threshold, - for example, because, following the making of a lengthy series of coffees, the electric power of the second resistance 11 is no longer capable of assuring the right outlet temperature - the control system 24 blocks the possibility of making further coffees and commences the phase of re-establishing the temperature in the boiler, at the end of which it will again become possible to prepare a new series of coffees, all as described in Phase 2. The operating modalities of Phase 3 are the same as those of Phase 1, except for the fact that that it lasts only for about half as long, because the average initial temperature of the system is greater than in the case of Phase 1.

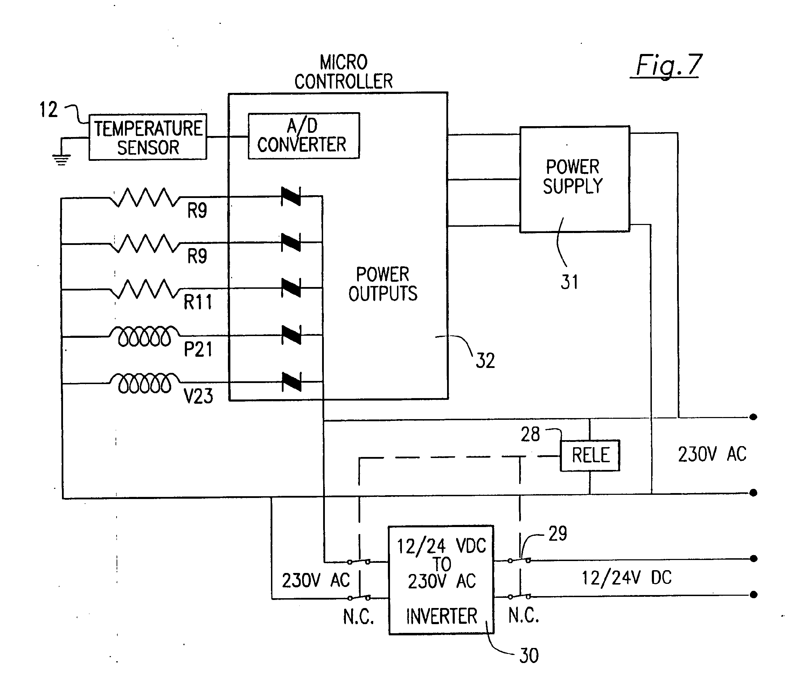

Figure 7 describes the electrical circuit of Figure 6 in greater detail. The components 32, 31, 28, 30 jointly constitute the component 24 of Figure 6. The inverter 6 transforms the direct current at the input (12 or 24 V d.c.) into alternating current at 230 V a.c. The feeder 31 transforms the alternating input current into the direct current needed for the functioning of the microprocessor 32 that control and coordinates all the electrical meanss of the maker, inclusive of the user interface (25 in Figure 6).

Upon becoming excited, the relay 28, by means of four contacts 29 that are normally closed, deactivates the inverter.

The electrical equipment is represented as follows:

R9/1 is the first resistance 9 of Figure 6, power 120 W,
R9/2 is the supplementary resistance contained in the casing of 9, power 300 W,
R11 is the second resistance 11 of Figure 6,
R21 is the pump 21 of Figure 6,
V23 is the electromagnetic valve 23 of Figure 6.

The device functions in the following manner:

It can be operated either at 12/24 V d.c. or at 230 V a.c. without the user having to make any particular adjustments.

iii) When the user connects the maker to a 230 V a.c. supply, the relay 28 becomes excited and opens the contacts 29 (normally closed), thus disconnecting the inverter and feeding the microprocessor 32 and the various items of equipment R9/1, R9/2, R11, P21, V23. When the user connects the maker to a 12/24 V d.c. supply, the inverter transforms the direct current into alternating current and feeds it to the microprocessor and the various items of equipment R9/1, R9/2, R11, P21, V23.

iv) When the user connects the maker to both energy sources, the system privileges the 230 V a.c. source, because in this case the relay 28 wiill once gain become excited and open the (normally closed) contacts 29, thus disconnecting the inverter and the low-voltage line that feeds it.

In all the previously described cases, as soon as the connection is made, the microprocessor 32 begins to carry out its control program that permits the maker to perform the functions envisaged by the designer.

An alternative coffee maker not according to the invention comprises an electric equipment adapted to work only with an energy source of 12-24 V d.c. Should this alternative coffee maker be used with a high voltage supply source, it would be provided with an auxiliary electric converter, as for instance from 230V a.c. to 12 V d.c.

In general, the helicoidal strip and its supports are fixed in the boiler by means that make it possible for them to be removed from the cylindrical body 2, so that they can be easily taken out in the maintenance phase to eliminate calcareous deposits.

**Claims**

1. An electric coffee maker provided with command and control means for

   - feeding the coffee extraction chamber with water at the percolation temperature reached in a boiler (1) thanks to at least a first electrical resistance (9) located into the extension of the boiler and at least a second electric resistance (11) provided in the uppermost section of the boiler,
   - pumping cold water into the lower part of the boiler, said water at percolation temperature issuing from the upper part of the boiler which is provided with separator baffles (4) to define at least two compartments (5) superposed on and communicating with each other through openings (8) in the separator baffles, the lowermost compartment being in communication with the cold water inlet (6) and the uppermost compartment being in communication with the outlet (7) for the water at percolation temperature,

   and being **characterized in that** the boiler comprises means (P1, P2) that draw energy from two alternative sources of electric energy, the control means being fed by said electric energy that control all the operating functions of the coffee maker and is supplied either by an electric energy source providing low-voltage direct current or by the electric energy source of a conventional commercial electricity network providing alternating current and comprising conventional electric equipment that make said first electrical resistance (9) furnish a power selected between 60 upto 400 Watt and where the second electrical resistance (11) has a power not exceeding 360 Watt, the control means automatically selecting the coffee maker being fed by current from the commercial electricity network when the coffee maker is connected to both supply sources.

2. An electric coffee maker in accordance with Claim 1 where the first electrical resistance (9) comprises a supplementary resistor that brings the total power of the first resistance up to 500 Watt when the coffee maker is fed by current from a commercial electricity network.

3. An electric coffee maker in accordance with Claims 1 and 2 that is fed only from an electric energy source providing low-voltage direct current and that the control means are capable of making the first electrical resistance (9) furnish a power lower than 400 Watt and the second electrical resistance (11) to furnish a power lower than 360 Watt.

4. An electric coffee maker according to claims 1-3 **characterized in that** the opening (8) in the uppermost separator baffle (4) is provided in correspondence with the second electric resistance (11).

5. An electric coffee maker in accordance with Claims 1 to 4 where the command and control means perform phases of:

   i) activating the coffee maker to commence heating the water when the control means insert the first electrical resistance (9) that brings the water up to the percolation temperature under the control of the temperature signal provided by a temperature sensor (12,13) situated in the uppermost compartment;
   ii) sending a command that sets the pump (21) in motion and opens an electromagnetic valve (23) that controls the water flow after the maker has been charged with coffee, so that the cold water drawn from the tank (20) is pushed into the boiler (1) by the pump at the same time as a quantity of water substantially equal to the volume of the coffee leaves the boiler;

iii) shutting down the first electrical resistance (9) and regulating the water temperature in the uppermost compartment in accordance with the temperature signal provided by the temperature sensor (12,13) by means of the activation and deactivation of the second electrical resistance (11) in order to maintain the water temperature in said compartment within the range suitable for the preparation of the coffee;

iv) blocking the coffee production function and commencing the heating of the water in the boiler (1) at the moment in which the temperature in said compartment drops below a predetermined minimum threshold and the available electric power is no longer capable of assuring the percolation temperature at the outlet (7) from the boiler.

6. An electric coffee maker in accordance with Claim 4 where phase iii) causes the deactivation of the first electrical resistance (9) and the regulation of the water temperature in the boiler uppermost compartment in accordance with the temperature signal provided by the temperature sensor (12,13) by means of the activation and deactivation of the second electrical resistance (11) to maintain the water temperature in said compartment within the range suitable for coffee preparation in the phases of supplying hot water, deactivating the second electrical resistance (11) and activating the first electrical resistance (9) to heat the whole of the water contained in the boiler (1) in the phases intermediate between supplying one series of coffees and the next.

**Patentansprüche**

1. Elektrische Kaffeemaschine mit Befehls- und Steuermitteln zum

- Beschicken der Kaffeeextraktionskammer mit Wasser auf der Durchlauftemperatur, die in einem Boiler (1) mit Hilfe von wenigstens einem elektrischen Widerstand (9), der in der Verlängerung des Boilers und wenigstens eines zweiten elektrischen Widerstandes (11), der am obersten Abschnitt des Boilers vorgesehen ist, erreicht ist,
- Pumpen von kaltem Wasser in den unteren Teil des Boilers, wobei das Wasser mit der Durchlauftemperatur vom oberen Teil des Boilers ausgegeben wird, der mit Trennwänden (4) versehen ist, um wenigstens zwei Abteile (5) zu begrenzen, die übereinanderliegen und miteinander durch Öffnungen (8) in den Trennwänden in Verbindung stehen, wobei das unterste Abteil mit dem Kaltwassereinlass (6) verbunden ist und das oberste Abteil mit dem Auslass (7) für das Wasser auf der Durchlauftemperatur verbunden ist,

und die **dadurch gekennzeichnet ist, dass** der Boiler Mittel (P1, P2) aufweist, die Energie von zwei alternativen elektrischen Energiequellen beziehen, wobei die Steuermittel durch die elektrische Energie gespeist werden, die alle Betriebsfunktionen der Kaffeemaschine steuert und entweder durch eine elektrische Energiequelle, die einen Gleichstrom mit niedriger Spannung bereitstellt, oder durch die elektrische Energiequelle in Form eines herkömmlichen kommerziellen Stromnetzes, das Wechselstrom bereitstellt, geliefert wird, und eine herkömmliche elektrische Ausrüstung aufweist, die bewirkt, dass der erste elektrische Widerstand (9) eine Leistung liefert, die zwischen 60 bis zu 400 Watt gewählt ist, und der zweite elektrische Widerstand (11) eine Leistung hat, die 360 Watt nicht überschreitet, wobei, wenn die Kaffeemaschine an beide Energieversorgungsquellen angeschlossen ist, die Steuermittel automatisch die Versorgung der Kaffeemaschine mit Strom vom kommerziellen Stromnetz wählen.

2. Elektrische Kaffeemaschine nach Anspruch 1, wobei der elektrische Widerstand (9) einen Zusatzwiderstand aufweist, der die Gesamtleistung des ersten Widerstands auf 500 Watt bringt, wenn die Kaffeemaschine mit Strom aus einem kommerziellen elektrischen Netz gespeist wird.

3. Elektrische Kaffeemaschine nach Anspruch 1 und 2, die nur von einer elektrischen Energiequelle gespeist wird, welche einen Gleichstrom mit niedriger Spannung bereitstellt, und die Steuermittel bewirken können, dass der elektrische Widerstand (9) eine Leistung niedriger als 400 Watt liefert und der zweite elektrische Widerstand (11) eine Leistung niedriger als 360 Watt liefert.

4. Elektrische Kaffeemaschine nach Anspruch 1 bis 3, **dadurch gekennzeichnet, dass** die Öffnung (8) in der obersten Trennwand (4) gegenüber dem zweiten elektrischen Widerstand (11) vorgesehen ist.

5. Elektrische Kaffeemaschine nach Anspruch 1 bis 4, wobei die Befehls- und Steuermittel die Schritte durchführen:

i) Aktivieren der Kaffeemaschine, damit das Erwärmen des Wassers begonnen wird, wenn die Steuermittel den ersten elektrischen Widerstand (9) zuschalten, der das Wasser auf die Durchlauftemperatur bringt, unter Steuerung durch das Temperatursignal, das von einem Temperatursensor (12, 13), der im obersten Abteil angeordnet ist, bereitgestellt wird;

ii) Senden eines Befehls, der die Pumpe (21) in Bewegung setzt und ein elektromagnetisches Ventil (23) öffnet, das den Wasserstrom steuert, nachdem die Kaffeemaschine mit Kaffee gefüllt worden ist, so dass das aus dem Vorratsbehälter (20) abgezogene kalte Wasser durch die Pumpe in den Boiler (1) gepresst wird, und gleichzeitig eine Menge Wasser im Wesentlichen gleich dem Kaffeevolumen den Boiler verlässt;

iii) Abschalten des ersten elektrischen Widerstandes (9) und Regeln der Wassertemperatur in dem obersten Abteil gemäß dem Temperatursignal, das von dem Temperatursensor (12, 13) bereitgestellt wird, mittels Aktivierung und Deaktivierung des zweiten elektrischen Widerstandes (11), um die Wassertemperatur in diesem Abteil innerhalb des Bereiches zu erhalten, der für die Bereitung des Kaffees geeignet ist;

iv) Blockieren der Kaffeeherstellfunktion und Beginn des Erwärmens des Wassers in dem Boiler (1) zu dem Zeitpunkt, an welchem die Temperatur in dem Abteil unter einen vorbestimmten Minimalschwellenwert fällt und die zur Verfügung stehende elektrische Leistung nicht mehr in der Lage ist, die Durchlauftemperatur am Auslass (7) des Boilers sicherzustellen.

6. Elektrische Kaffeemaschine nach Anspruch 4, wobei der Schritt iii) die Deaktivierung des ersten elektrischen Widerstandes (9) und die Regelung der Wassertemperatur in dem obersten Abteil des Boilers gemäß dem Temperatursignal, das durch den Temperatursensor (12, 13) bereitgestellt wird, mittels Aktivierung und Deaktivierung des zweiten elektrischen Widerstandes (11) bewirkt, zum Halten der Wassertemperatur in diesem Abteil innerhalb des für die Kaffeeherstellung geeigneten Bereiches in den Phasen des Zuführens von heißem Wasser und das Deaktivieren des zweiten elektrischen Widerstandes (11) und Aktivieren des ersten elektrischen Widerstandes (9) zur Erwärmung des gesamten im Boiler (1) enthaltenen Wassers in den Phasen zwischen einer Folge von Kaffeeausgaben und der nächsten.

**Revendications**

1. Machine à café électrique munie de moyens de commande et de contrôle pour :

- alimenter la chambre d'extraction de café par de l'eau à la température de percolation atteinte dans une chaudière (1) grâce à au moins une première résistance électrique (9) s'étendant sur toute la hauteur de la chaudière, et au moins une seconde résistance électrique (11) prévue dans la section la plus haute de la chaudière,

- pomper de l'eau froide dans la partie inférieure de la chaudière, l'eau à la température de percolation sortant de la partie supérieure de la chaudière munie de chicanes de séparation (4) pour définir au moins deux compartiments (5) superposés et en communication les uns avec les autres par des ouvertures (8) percées dans les chicanes de séparation, le compartiment le plus bas étant en communication avec l'entrée d'eau froide (6) et le compartiment le plus haut étant en communication avec la sortie (7) de l'eau à la température de percolation,

**caractérisée en ce que**
la chaudière comprend des moyens (P1, P2) qui utilisent l'énergie de deux sources alternatives d'énergie électrique, les moyens de contrôle étant alimentés par l'énergie électrique qui commande toutes les fonctions opérationnelles de la machine à café et qui est fournie, soit par une source d'énergie électrique fournissant du courant continu basse tension, soit par la source d'énergie électrique d'un réseau d'électricité commercial conventionnel fournissant du courant alternatif et comprenant un équipement électrique conventionnel qui permet à la première résistance électrique (9) de produire une puissance sélectionnée allant de 60 Watts jusqu'à 400 Watts, et à la seconde résistance électrique (11) de produire une puissance ne dépassant pas 360 Watts, les moyens de contrôle sélectionnant automatiquement l'alimentation de la machine à café par du courant provenant du réseau d'électricité commercial lorsque cette machine à café est connectée aux deux sources d'alimentation.

2. Machine à café électrique selon la revendication 1,
dans laquelle
la première résistance électrique (9) comprend une résistance supplémentaire qui amène la puissance totale de la première résistance jusqu'à 500 Watts lorsque la machine à café est alimentée par du courant provenant d'un réseau d'électricité commercial.

3. Machine à café électrique selon l'une quelconque des revendications 1 et 2, qui n'est alimentée que par une source d'énergie électrique fournissant du courant continu basse tension, tandis que les moyens de contrôle sont capables d'amener la première résistance électrique (9) à fournir une puissance inférieure à 400 Watts, et la seconde résistance électrique (11) à fournir une puissance inférieure à 360 Watts.

**4.** Machine à café électrique selon l'une des revendications 1 à 3,
**caractérisée en ce que**
l'ouverture (8) percée dans la chicane de séparation la plus haute (4) est prévue en correspondance avec la seconde résistance électrique (11).

**5.** Machine à café électrique selon l'une des revendications 1 à 4,
**caractérisée en ce que**
les moyens de commande et de contrôle effectuent les phases consistant à:

i) mettre en marche la machine à café pour démarrer le chauffage de l'eau lorsque les moyens de contrôle mettent en fonction la première résistance électrique (9) qui chauffe l'eau à la température de percolation sous le contrôle du signal de température fourni par un capteur de température (12, 13) situé dans le compartiment le plus haut,
ii) envoyer un signal qui met en marche la pompe (21) et ouvre une vanne électromagnétique (23) contrôlant l'écoulement de l'eau après que la machine à café ait été chargée de café, de façon que l'eau froide tirée du réservoir (20) soit poussée dans la chaudière (1) par la pompe en même temps qu'une quantité d'eau essentiellement égale au volume du café quittant la chaudière,
iii) couper la première résistance électrique (9) et réguler la température de l'eau dans le compartiment le plus haut, suivant le signal de température fourni par le capteur de température (12, 13), grâce à la mise en marche et à la coupure de la seconde résistance électrique (11), de manière à maintenir la température de l'eau se trouvant dans le compartiment, à l'intérieur de la plage convenable pour la préparation du café, et
iv) bloquer la fonction de production du café et démarrer le chauffage de l'eau dans la chaudière (1) au moment où la température de l'eau dans ce compartiment tombe au-dessous d'un seuil minimum prédéterminé, et où la puissance électrique disponible n'est plus capable d'assurer la température de percolation à la sortie (7) de la chaudière.

**6.** Machine à café électrique selon la revendication 4,
dans laquelle
la phase iii) produit la coupure de la première résistance électrique (9) et la régulation de la température de l'eau dans le compartiment le plus haut de la chaudière, suivant le signal de température fourni par le capteur de température (12, 13), au moyen de la mise en marche et de la coupure de la seconde résistance électrique (11) pour maintenir la température de l'eau dans ce compartiment, à l'intérieur de la plage convenable pour la préparation du café, dans les phases de fourniture d'eau chaude, de coupure de la seconde résistance électrique (11) et de mise en marche de la première résistance électrique (9) pour faire chauffer toute l'eau contenue dans la chaudière (1), dans les phases intermédiaires entre la fourniture d'une série de tasses à café et la suivante.

_Fig.1_

_Fig.2_

_Fig.3_

_Fig.4_

## Fig.5

## _Fig.6_

Fig.7

MICRO
CONTROLLER

12

TEMPERATURE
SENSOR

A/D
CONVERTER

POWER
SUPPLY

31

R9

R9

R11

P21

V23

POWER
OUTPUTS

32

28

RELE

230V AC

29

230V AC

12/24 VDC
TO
230V AC

INVERTER

12/24V DC

N.C.

N.C.

30

EP 1 460 353 B1

**EP 1 460 353 B1**

## REFERENCES CITED IN THE DESCRIPTION

### Patent documents cited in the description

- GB 1373990 A
- ES 2120323 A
- LU 40639

17